(19) Europäisches Patentamt
European Patent Office
Office européen des brevets

(11) **EP 2 667 057 A1**

(12) **EUROPEAN PATENT APPLICATION**
published in accordance with Art. 153(4) EPC

(43) Date of publication:
**27.11.2013 Bulletin 2013/48**

(51) Int Cl.:
**F16H 61/02** *(2006.01)*    **F16H 61/662** *(2006.01)*

(21) Application number: **11856144.8**

(22) Date of filing: **14.11.2011**

(86) International application number:
**PCT/JP2011/076192**

(87) International publication number:
**WO 2012/098757 (26.07.2012 Gazette 2012/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2011   JP 2011006651**

(71) Applicant: **Nissan Motor Co., Ltd**
**Yokohama-shi, Kanagawa 221-0023 (JP)**

(72) Inventors:
• **OKUDAIRA, Keita**
  **Kanagawa 243-0123 (JP)**
• **KOGA, Masato**
  **Kanagawa 243-0123 (JP)**

(74) Representative: **Hager, Thomas Johannes**
**Hoefer & Partner**
**Patentanwälte**
**Pilgersheimer Strasse 20**
**81543 München (DE)**

(54) **TRANSMISSION CONTROL DEVICE FOR CONTINUOUSLY VARIABLE TRANSMISSION, AND CONTROL METHOD**

(57)    A continuously variable transmission (4) shifts between a pair of pulleys (11, 12) via an endless torque transmission member (13) mounted on the pair of pulleys (11, 12). A controller (22) executes a feedback-control so that a real speed ratio between the pair of pulleys (11, 12) follows a target speed ratio (S6, S46). The controller (22) determines whether or not a elongation-affected shift condition, under which it is impossible for the real speed ratio to reach the target speed ratio depending on whether or not the endless torque transmission member (13) is elongated, holds (S2, S3, S12, S13), and limits a speed ratio feedback control when the elongation-affected shift condition holds (S4, S24, S34).

FIG. 8

## Description

FIELD OF THE INVENTION

This invention relates to a shift control for a continuously variable transmission using an endless torque transmission member such as a chain.

BACKGROUND OF THE INVENTION

In a continuously variable transmission (CVT) using an endless torque transmission member such as a chain, the elongation of the endless torque transmission member affects a shift control. If the chain is elongated in a state where a winding radius on a primary pulley is fixed, a winding radius on a secondary pulley increases and a speed ratio changes to an increasing side, i.e. a so-called low side.

JP08-327857A published in 1996 by the Japan Patent Office teaches to resolve a deviation between a target speed ratio and a real speed ratio by a speed ratio feedback control using a proportional-integral (PI) control. For example, even if the target speed ratio and the real speed ratio do not match due to the elongation of a chain, the real speed ratio eventually matches the target speed ratio by executing the speed ratio feedback control.

SUMMARY OF THE INVENTION

If a shift changes to a low side due to the elongation of the chain, the values of a maximum speed ratio and a minimum speed ratio, which the CVT can achieve, also shift to the low side. As a result, it may not be possible to achieve the target speed ratio if the target speed ratio is set at the minimum speed ratio, for example, in an elongated state of the chain. If the target speed ratio cannot be achieved, a feedback correction amount is accumulated to resolve the speed ratio deviation in the feedback control. This causes a delay in the response of a speed ratio control when the target speed ratio is changed to a realizable high-side speed ratio later.

It is therefore an object of this invention to resolve a response delay of a speed ratio feedback control due to the elongation of an endless torque transmission member of a CVT.

In order to achieve the above object, this invention provides a control device for a continuously variable transmission changing a speed ratio between a pair of pulleys via an endless torque transmission member mounted on the pair of pulleys. The control device comprises a controller programmed to feedback-control the speed ratio so that an real speed ratio between the pair of pulleys changes towards a target speed ratio, determine if an elongation-affected shift condition, in which the real speed ratio is prevented from reaching the target speed ratio due to an elongation of the endless torque transmission member holds, and suppress the feed back control of the speed ratio when the elongation-affected shift condition has been determined to hold.

The details as well as other features and advantages of this invention are set forth in the remainder of the specification and are shown in the accompanying drawings.

BRIEF DESCRIPTION OF THE DRAWINGS

FIG. 1 is a schematic diagram of a control device for a continuously variable transmission according to a first embodiment of this invention,
FIG. 2 is a diagram showing a characteristic of a target speed ratio map according to a prior art technology,
FIG. 3 is a diagram showing effects of an elongation of a V-chain on a speed ratio control,
FIG. 4 is a diagram showing a relationship between an input torque of a primary pulley of the continuously variable transmission and the elongation of a V-chain obtained by a simulation conducted by inventors,
FIG. 5 is a diagram showing a relationship between a thrust force of a secondary pulley of the continuously variable transmission and the elongation of the V-chain obtained by a simulation conducted by the inventors,
FIG. 6 is a diagram showing a relationship between a rotation speed of the primary pulley and the elongation of the V-chain obtained by a simulation conducted by the inventors,
FIG. 7 is a diagram showing a relationship between a speed ratio and the elongation of the V-chain obtained by a simulation conducted by the inventors,
FIG. 8 is a flow chart showing an integral term update limiting routine executed by a shift controller according to the first embodiment of this invention,
FIG. 9 is a diagram showing a target speed ratio setting region set by the shift controller,
FIG. 10 is a flow chart showing an integral term update limiting routine executed by the shift controller according to the second embodiment of this invention,
FIG. 11 is a diagram showing a characteristic of a thrust ratio map stored by a shift controller according to a third embodiment of this invention,
FIG. 12 is a diagram showing a method for setting a secondary balance thrust force and a primary balance thrust force conducted by the shift controller according to the third embodiment of this invention,
FIGS. 13A and 13B are a block diagram showing a pulley thrust force feedback control function of the shift controller according to the third embodiment of this invention,
FIG. 14 is a flow chart showing an integral term update limiting routine executed by the shift controller according to the third embodiment of this invention, and
FIGS. 15A and 15B are timing charts showing changes of a speed ratio and a pulley thrust force by the integral term update limiting routine executed by the shift controller according to the third embodiment of this invention.

## DESCRIPTION OF THE PREFERRED EMBODIMENTS

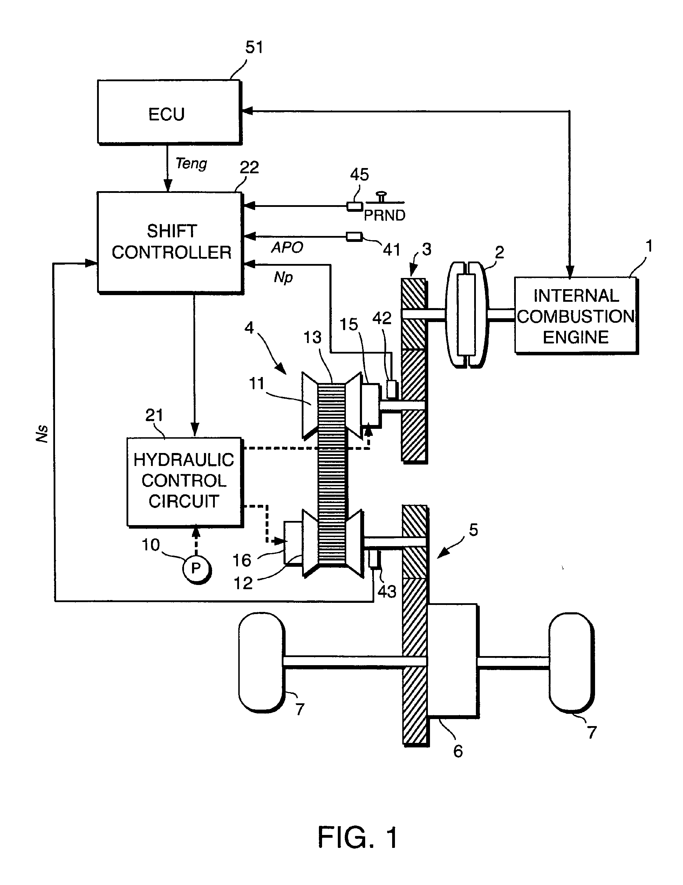

Referring to FIG. 1, a vehicle drive system comprises an internal combustion engine 1 as a motive power source. Output rotation of the internal combustion engine 1 is transmitted to drive wheels 7 via a torque converter 2, a first gear train 3, a continuously variable transmission (hereinafter, referred to as a CVT) 4, a second gear train 5 and a reduction gear 6. The CVT 4 is constituted by a V-chain continuously variable transmission mechanism.

The CVT 4 comprises a primary pulley 11, a secondary pulley 12 and a V-chain 13 as an endless torque transmission member mounted on the pulleys 11 and 12. The V-chain 13 has a V-shaped cross-section, the width of which is gradually reduced toward the center of the V-chain 13. A rotation torque of the internal combustion engine 1 is input into the primary pulley 11 via the torque converter 2 and the first gear train 3. The V-chain 13 transmits the rotation torque of the primary pulley 11 to the secondary pulley 12. A rotation torque of the secondary pulley 12 is output to the drive wheels 7 via the second gear train 5 and the reduction gear 6.

Each of the pulleys 11 and 12 is composed of a fixed sheave and a movable sheave arranged such that a sheave surface thereof faces the fixed sheave to form a V-groove.

A hydraulic cylinder 15 for axially displacing the movable sheave is provided on the back surface of the movable sheave of the primary pulley 11. A hydraulic cylinder 16 for axially displacing the movable sheave is provided on the back surface of the movable sheave of the secondary pulley 12.

The hydraulic cylinders 15 and 16 apply thrust forces corresponding to supplied hydraulic pressures to the movable sheaves to change the widths of the V-grooves. As a result, a winding radius of the V-chain 13 on each pulley 11, 12 changes and the CVT 4 continuously changes a speed ratio. It should be noted that the "speed ratio" is a value obtained by dividing the rotation speed of the primary pulley 11 by that of the secondary pulley 12. Thrust forces applied to the respective movable sheaves of the primary and secondary pulleys 11, 12 by the hydraulic cylinders 15, 16 are referred to as pulley thrust forces.

A shift control of the CVT 4 is executed by a hydraulic pump 10 which is driven utilizing a part of power of the internal combustion engine 1, a hydraulic control circuit 21 which adjusts a hydraulic pressure from the hydraulic pump 10 and supplies it to the hydraulic cylinders 15, 16, and a shift controller 22 which controls the hydraulic control circuit 21.

The shift controller 22 is constituted by a microcomputer comprising a central processing unit (CPU), a read-only memory (ROM), a random access memory (RAM), and an input/output interface (I/O interface). The controller may be constituted by a plurality of microcomputers.

The shift controller 22 determines a target speed ratio by a known method based on a load of the internal combustion engine 1 and a vehicle speed and feedback-controls the speed ratio of the CVT 4 to the target speed ratio.

Detection data are input into the shift controller 22 in the form of signals from each of an accelerator pedal opening sensor 41 that detects an opening $APO$ of an accelerator pedal provided in the vehicle as a load of the internal combustion engine 1, an inhibitor switch 45 that detects a position of a selector lever provided in the vehicle, a primary rotation sensor 42 that detects a rotation speed $Np$ of the primary pulley 11 and a secondary rotation sensor 43 that detects a rotation speed $Ns$ of the secondary pulley 12. The vehicle speed for determining the target speed ratio may be calculated from the rotation speed $Ns$ of the secondary pulley 12 and a speed reduction ratio of the second gear train 5 and the reduction gear 6.

Speed ratio feedback control executed by the shift controller 22 will now be described.

The target speed ratio of the CVT 4 is generally determined according to an output rotation speed of the CVT 4 and the load of the internal combustion engine 1. The load of the internal combustion engine 1 can be expressed by the accelerator pedal opening $APO$ detected by the accelerator pedal opening sensor 41.

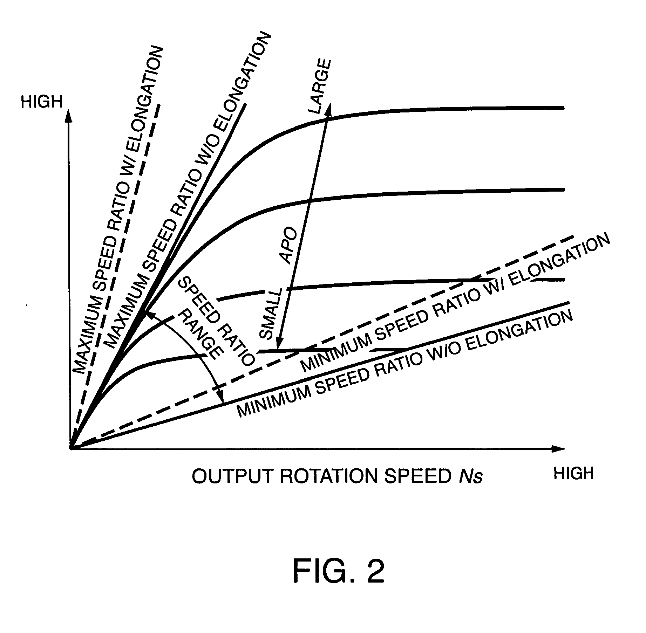

An input rotation speed of the CVT 4, i.e. a target rotation speed of the primary pulley 11 has been conventionally obtained from the rotation speed $Ns$ of the secondary pulley 12 and the accelerator pedal opening $APO$ by referring to a characteristic map shown in FIG. 2. The target speed ratio is a value obtained by dividing the target rotation speed of the primary pulley 11 by the rotation speed of the secondary pulley 12. The target speed ratio in this case is set on the premise that the V-chain 13 is not elongated.

Inventors analyzed an impact on the CVT 4 when the V-chain 13 is elongated under the target speed ratio set based on such a map through simulations.

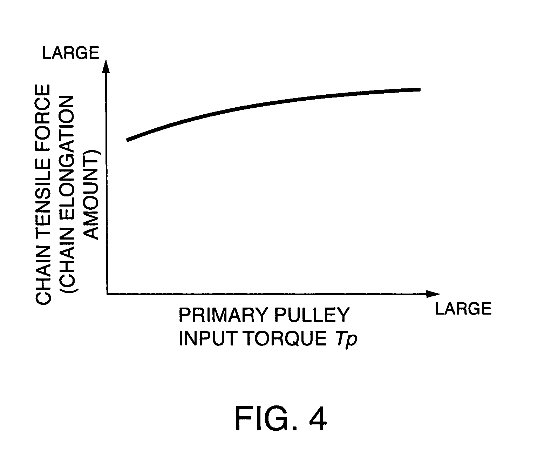

Simulation results are shown in FIGS. 4 to 7. It should be noted that an elongation amount of the V-chain 13 depends on a tensile force of the V-chain 13. In other words, the elongation amount of the V-chain 13 and the tensile force of the V-chain 13 are equivalent.

Referring to FIG. 4, the tensile force of the V-chain 13 moderately increases with an increase in the input torque of the primary pulley 11 if a speed ratio of the primary pulley 11 and the secondary pulley 12, the pulley thrust force of the secondary pulley 12 and the rotation speed $Np$ of the primary pulley 11 are constant.

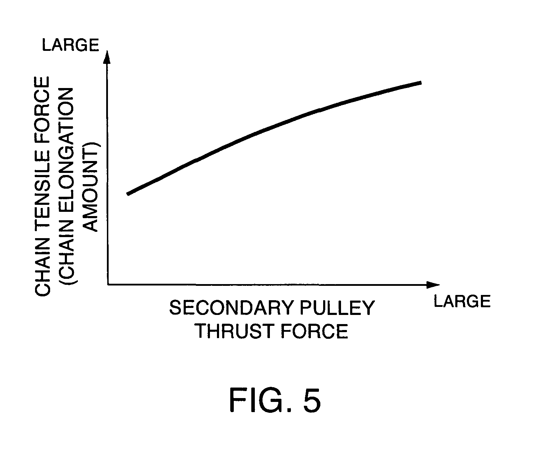

Referring to FIG. 5, the tensile force of the V-chain 13 increases with an increase in the pulley thrust force of the secondary pulley 12 if the input torque and the rotation speed $Np$ of the primary pulley 11 and the speed ratio of the primary pulley 11 and the secondary pulley 12 are constant.

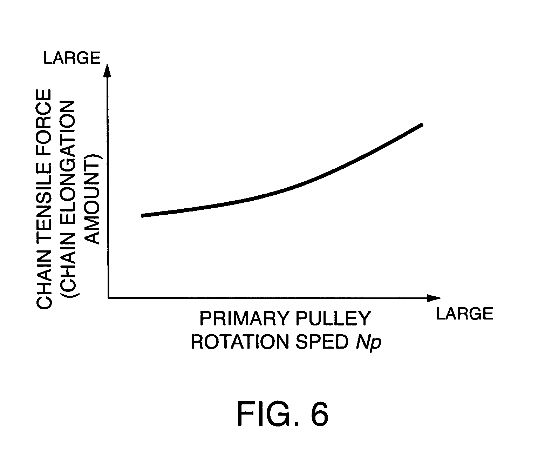

Referring to FIG. 6, the tensile force of the V-chain 13 increases with an increase in the rotation speed $Np$ of the primary pulley 11 if the input torque to the primary pulley 11, the pulley thrust forces of the secondary pulley 12 and the primary pulley 11 are constant.

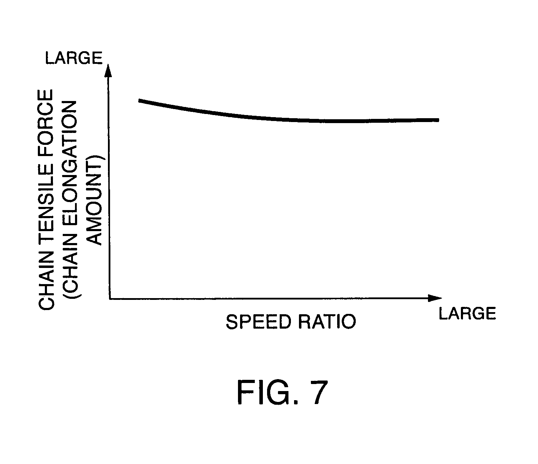

Referring to FIG. 7, the tensile force of the V-chain 13 tends to slightly decrease with an increase in the speed ratio of the primary pulley 11 and the secondary pulley 12 if the pulley thrust force of the secondary pulley 12, the input torque of the primary pulley 11 and the rotation speed $Np$ of the primary pulley 11 are constant.

An error in the speed ratio control caused by the elongation of the V-chain 13 due to these impacts is generally resolved during the speed ratio feedback control and the real speed ratio is eventually controlled to the target speed ratio. However, the following phenomenon is seen near a minimum speed ratio and a maximum speed ratio.

A stopper is provided at each of a forward position and a reverse position of the movable sheave of the primary pulley 11. In a state where the position of the movable sheave of the primary pulley 11 is restricted by the stopper, the elongation of the V-chain 13 increases only the winding radius of the V-chain 13 on the secondary pulley 12. The elongation of the V-chain 13 causes both the minimum speed ratio and the maximum speed ratio of the CVT 4 to change to a low side as shown in FIG. 2.

As a result, the speed ratio in a region of FIG. 2 from a minimum speed ratio without elongation to a minimum speed ratio with elongation is a speed ratio region which cannot be physically realized by the CVT 4 when the V-chain 13 is elongated. On the other hand, the speed ratio in a region of FIG. 2 from a maximum speed ratio without elongation to a maximum speed ratio with elongation is a speed ratio region which is made realizable by the CVT 4 by the elongation of the V-chain 13. However, since this region is outside a target speed ratio setting region on the map, the speed ratio in this region is not set as the target speed ratio.

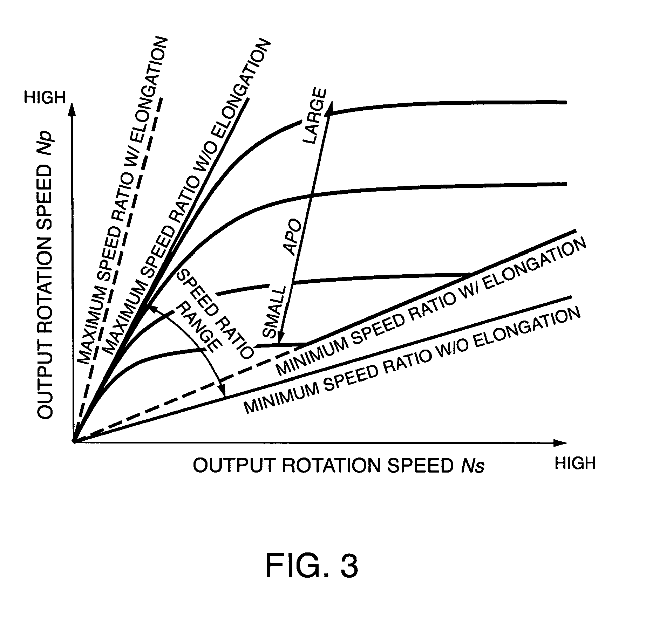

That is, the elongation of the V-chain 13 creates an unrealizable target speed ratio region near the minimum speed ratio of the CVT 4 and an unusable target speed ratio region near the maximum speed ratio as shown in FIG. 3, with the result that a speed ratio region, which is constantly realizable, becomes narrower. In the following description, the speed ratio region that is constantly realizable is referred to as a constantly realizable speed ratio region.

The above shifts of the speed ratio region further cause the following problem when the target speed ratio is set assuming the V-chain 13 without elongation and the real speed ratio is feedback-controlled to the target speed ratio by applying a proportional-integral (PI) control or a proportional-integral-derivative (PID) control.

Specifically, if the target speed ratio is set in the region of FIG. 2 between the minimum speed ratio without elongation and the minimum speed ratio with elongation with the V-chain 13 elongated, the real speed ratio can never reach the target speed ratio. That is, the target speed ratio and the real speed ratio continue to deviate. As a result, an integral term of the feedback control is accumulated until the target speed ratio is reset in the constantly realizable speed ratio region due to a change in vehicle driving conditions such as the rotation speed $Ns$ of the secondary pulley 12 and the accelerator pedal opening $APO$. Since the cumulative integral term is gradually resolved during the feedback control executed when the target speed ratio is reset in the constantly realizable speed ratio region, the accumulation of the integral term causes a delay in the shift control.

The shift controller 22 executes the following control to solve the above problem caused on the shift control by the elongation of the V-chain 13.

Specifically, the shift controller 22 determines whether or not the present transmission state falls under an elongation-affected shift condition under which it is impossible to achieve the target speed ratio depending on whether or not the V-chain 13 is elongated. The shift controller 22 limits the speed ratio feedback control if determining that the present transmission state falls under the elongation-affected shift condition. Specifically, in this embodiment, the shift controller 22 determines that the present transmission state falls under the elongation-affected shift condition and prohibits the update of the integral term of the PI control or the PID control if the target speed ratio is in the region of FIG. 2 between the minimum speed ratio without elongation and the minimum speed ratio with elongation and the real speed ratio is greater than the target speed ratio.

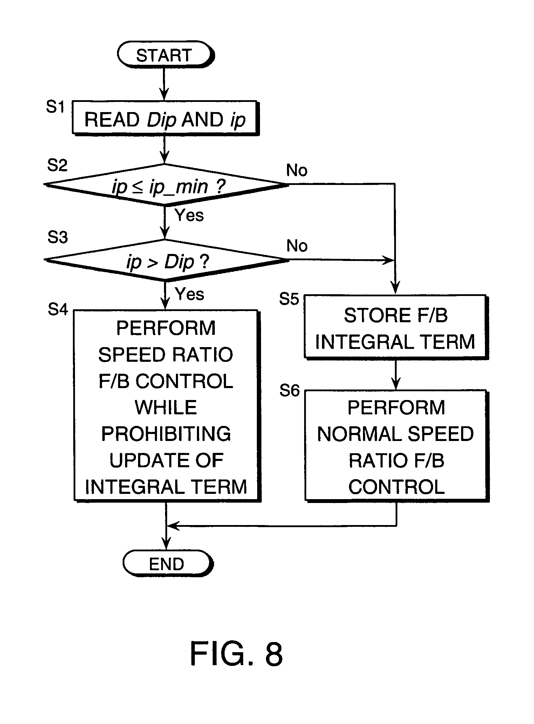

Referring to FIG. 8, an integral term update limiting routine executed by the shift controller 22 for this control will be described. This routine is repeatedly executed at a regular interval of, e.g. ten milliseconds during the rotation of the primary pulley 11.

In this embodiment, the target speed ratio is set without considering the elongation of the V-chain 13. Specifically, the target speed ratio is read from the accelerator pedal opening *APO* and the rotation speed *Ns* of the secondary pulley 12 with reference to a map of a target speed ratio *Dip* having the characteristic shown in FIG. 2 and stored in advance in the ROM.

In this case, the target speed ratio exceeding the maximum speed ratio without elongation is not set. Accordingly, even if the real speed ratio exceeds the maximum speed ratio without elongation, it is controlled to the target speed ratio by a normal feedback control. On the other hand, if the target speed ratio is set in a region between the minimum speed ratio with elongation and the minimum speed ratio without elongation, the real speed ratio cannot reach the target speed ratio if the V-chain 13 is elongated and the integral term of the feedback control is accumulated. The integral term update limiting routine is executed to prevent a response delay of a speed ratio change caused when the target speed ratio changes to a value greater than the minimum speed ratio with elongation as a result of the accumulation of the integral term.

In a step S1 of FIG. 8, the shift controller 22 reads the target speed ratio *Dip* and a real speed ratio *ip.*

The target speed ratio *Dip* is a value obtained by referring to the map of the target speed ratio *Dip* as described above. The real speed ratio *ip* is a ratio of the rotation speed *Np* of the primary pulley 11 detected by the primary rotation sensor 42 and the rotation speed *Ns* of the secondary pulley 12 detected by the secondary rotation sensor 43.

In a subsequent step S2, the shift controller 22 determines whether or not the real speed ratio *ip* is not greater than a minimum speed ratio threshold value *ip_min.* Here, the minimum speed ratio threshold value *ip_min* is set equal to the minimum speed ratio with elongation in FIG. 2. The minimum speed ratio threshold value *ip_min* may be set at a value slightly greater than the minimum speed ratio with elongation in consideration of the impact of a hardware performance variation. If the determination in the step S2 is affirmative, the real speed ratio *ip* is located on a line of the minimum speed ratio with elongation in FIG. 2 or at a lower right side of that line. On the other hand, if the determination in the step S2 is negative, the real speed ratio *ip* is located at an upper left side of the line of the minimum speed ratio with elongation of FIG. 2. In this region, the real speed ratio *ip* can be changed to both increase and decrease by the speed ratio feedback control.

If the determination in the step S2 is affirmative, the shift controller 22 determines in a step S3 whether or not the real speed ratio *ip* is greater than the target speed ratio *Dip.* If the real speed ratio *ip* is not greater than the target speed ratio *Dip,* it can be increased to the target speed ratio *Dip* by the speed ratio feedback control even if it is not greater than the minimum speed ratio with elongation. On the other hand, if the real speed ratio *ip* is greater than the target speed ratio *Dip,* it has to be further reduced to approach the target speed ratio *Dip.* Even if it is tried to further reduce the real speed ratio *ip* when the real speed ratio *ip* has already reached the minimum speed ratio with elongation in FIG. 2, it only results in the accumulation of the integral term and the real speed ratio *ip* cannot reach the target speed ratio *Dip.* This transmission condition is referred to as an elongation-affected shift condition near the minimum speed ratio.

If the determination either in the step S2 or in the step S3 is negative, the shift controller 22 executes the normal speed ratio feedback control, to which the PI control or the PID control is applied, in steps S5 and S6. In the step S5, a speed ratio feedback control amount is calculated by applying any one of the following control expressions. Here, the speed ratio feedback control amount is an update amount of the target speed ratio. If the shift controller 22 transmits the update amount of the target speed ratio to the hydraulic control circuit 21, the hydraulic control circuit 21 responsively adjusts the hydraulic pressure to be supplied to the hydraulic cylinders 15 and 16.

### PI control equation:

$$\Delta x(t) = K_p \Delta y(t) + K_i \int_0^t \Delta y(\tau)d\tau$$

### PID control equation:

$$\Delta x(t) = K_p \Delta y(t) + K_i \int_0^t \Delta y(\tau)d\tau + K_d \frac{d\Delta y(t)}{dt}$$

where,

$\Delta y$ = speed ratio deviation = *Dip-ip;*
$\Delta x$ = speed ratio feedback control amount;

$Kp$ = proportional gain;
$Ki$ = integral gain; and
$Kd$ = derivative gain.

The integral term means the second term of each of a PI control expression and a PID control expression as described below.

Integral term:

$$K_i \int_0^t \Delta y(\tau)d\tau$$

In the step S5, the shift controller 22 calculates the speed ratio feedback control amount and stores the integral term in the RAM.

In the step S6, the speed ratio is feedback-controlled using the speed ratio feedback control amount calculated in the step S5. After the processing of the step S6, the shift controller 22 terminates the routine.

On the other hand, if the determination in the step S3 is affirmative, the real speed ratio $ip$ is greater than the target speed ratio $Dip$ and has reached the minimum speed ratio with elongation. In this case, even if the speed ratio feedback control is executed, the real speed ratio $ip$ cannot reach the target speed ratio $Dip$ if the V-chain 13 is elongated. That is, the elongation-affected shift condition near the minimum speed ratio holds. As a result, there is a response delay of the speed ratio change when the integral term is accumulated and the target speed ratio $Dip$ changes to a value greater than the minimum speed ratio with elongation.

In this case, the shift controller 22 limits the feedback control amount by setting the integral term contained in the feedback control amount to a fixed value in a step S4 and the target speed ratio is feedback-controlled based on the limited value.

The integral term of the feedback control amount is a time integral value and continues to increase as long as the deviation between the target speed ratio and the real speed ratio continues. However, if the elongation-affected shift condition near the minimum speed ratio holds, the shift controller 22 prohibits the update of the value of the integral term stored in the RAM by not performing the processing of the step S5. As a result, the integral term stored in the RAM is fixed at a value immediately before the elongation-affected shift condition near the minimum speed ratio holds.

The shift controller 22 calculates the speed ratio feedback control amount using the PI control equation or the PID control equation in the step S4. The shift controller 22 calculates the feedback control amount by applying the fixed value stored in the RAM to the integral term at that time and executes the speed ratio feedback control based on the calculation result. After the processing of the step S4, the shift controller 22 terminates the routine.

The processing of the step S5 for updating the integral term in the RAM is not performed as long as the elongation-affected shift condition near the minimum speed ratio, under which the determinations in the steps S2 and S3 are both affirmative, is maintained. That is, the update of the integral term stored in the RAM is prohibited as long as the elongation-affected shift condition near the minimum speed ratio is maintained.

As described above, this integral term update limiting routine determines that the elongation-affected shift condition near the minimum speed ratio, under which the target speed ratio $Dip$ cannot be realized if the V-chain 13 is elongated, holds if the real speed ratio $ip$ is not greater than the minimum speed ratio with elongation in FIG. 2 and greater than the target speed ratio $Dip$. If the elongation-affected shift condition near the minimum speed ratio holds, the update of the integral term is prohibited in the step S4.

By prohibiting the update of the integral term, the integral term in the speed ratio feedback control amount stored in the RAM does not increase even if the speed ratio feedback control is continued using the same target speed ratio $Dip$ under the elongation-affected shift condition in the subsequent routine execution. Accordingly, the shift controller 22 can cause the real speed ratio $ip$ to quickly follow the target speed ratio $Dip$ when the vehicle driving condition changes and the target speed ratio exceeds the minimum speed ratio with elongation of FIG. 2.

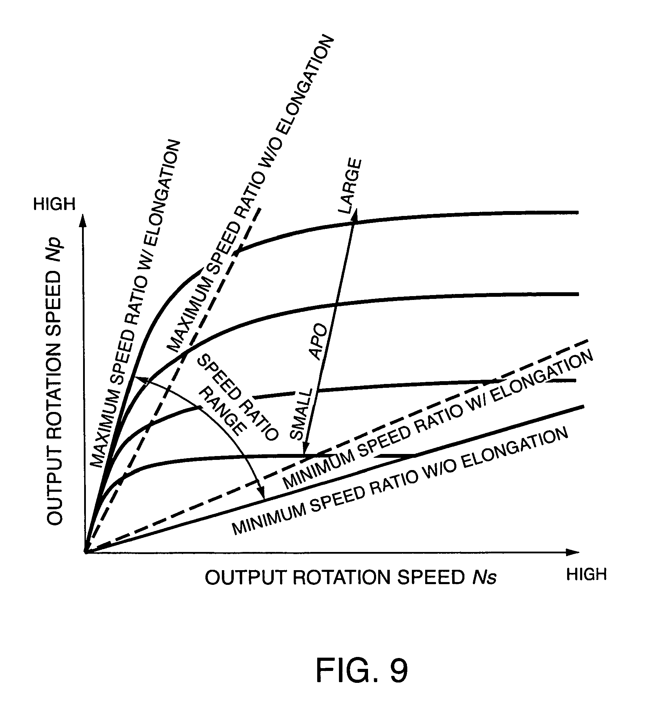

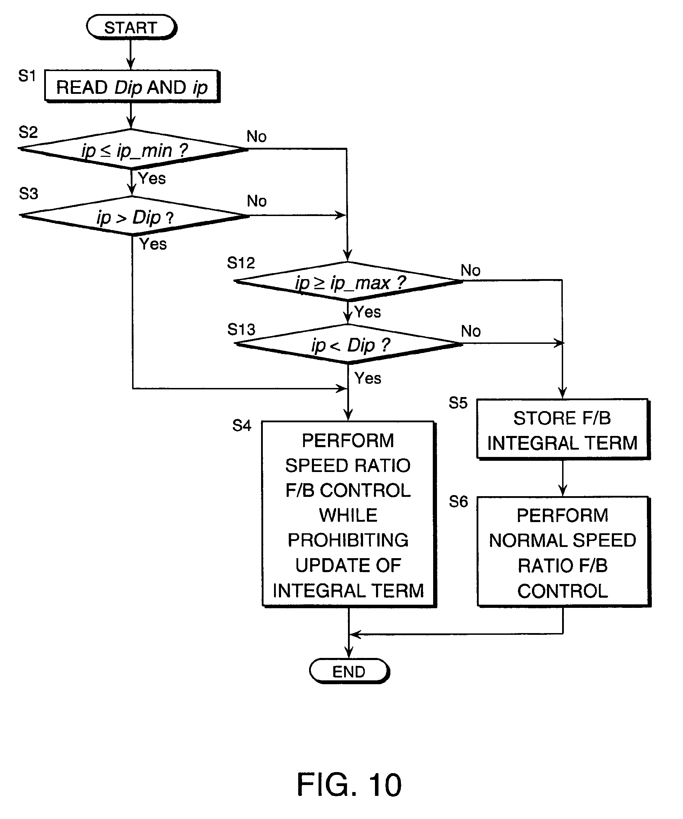

Referring to FIGS. 9 and 10, a second embodiment of this invention will be described.

Although the target speed ratio is set without considering the elongation of the V-chain 13 as in the conventional technology in the first embodiment, the target speed ratio $Dip$ is determined in consideration of the elongation of the V-chain 13 in this embodiment.

Specifically, the shift controller 22 determines the target speed ratio $Dip$ by referring to a characteristic map shown in FIG. 9. FIG. 9 is similar to FIG. 2 and a minimum speed ratio with elongation, a minimum speed ratio without elongation, a minimum speed ratio with elongation and a minimum speed ratio without elongation in FIG. 2 are the same as in FIG. 2. The target speed ratio $Dip$ is set between the maximum speed ratio without elongation and the minimum speed ratio without elongation in FIG. 2, whereas the target speed ratio is set between the maximum speed ratio with elongation and the minimum speed ratio without elongation in FIG. 9.

If the target speed ratio *Dip* is set based on the map of FIG. 9, a wide speed ratio range can be set, but on the other hand there are cases where the target speed ratio *Dip* cannot be realized depending on whether or not the V-chain 13 is elongated for both the minimum speed ratio and the maximum speed ratio. Specifically, if the V-chain 13 is not elongated, the target speed ratio *Dip* in a region of FIG. 9 between the maximum speed ratio with elongation and the maximum speed ratio without elongation cannot be physically achieved. If the V-chain 13 is elongated, the target speed ratio *Dip* in a region of FIG. 9 between the minimum speed ratio with elongation and the minimum speed ratio without elongation cannot be physically achieved.

The shift controller 22 determines whether or not the elongation-affected shift condition, under which the target speed ratio cannot be physically achieved depending on whether or not the V-chain 13 is elongated, holds for both transmission conditions near the minimum speed ratio and the maximum speed ratio and limits the update of the integral term according to the determination result.

Referring to FIG. 10, an integral term update limiting routine executed by the shift controller 22 based on the target speed ratio map of FIG. 9 will be described.

This routine is equivalent to a routine in which steps S12 and S13 are provided between the steps S2, S3 and the step S5 of FIG. 8. A routine execution condition is the same as in the first embodiment.

In the step S1, the shift controller 22 reads the target speed ratio *Dip* and the real speed ratio *ip*. The target speed ratio *Dip* is a value obtained by referring to the map having the characteristic shown in FIG. 9 and stored in advance in the ROM as described above.

As in the routine of FIG. 8, that the determination in the step S3 is affirmative means that the present transmission condition falls under the elongation-affected shift condition near the minimum speed ratio. If the elongation-affected shift condition near the minimum speed ratio holds, the real speed ratio *ip* cannot reach the target speed ratio *Dip* if the V-chain 13 is elongated. In this case, the shift controller 22 executes the feedback control by applying the fixed value stored in the RAM to the integral term in the step S4.

On the other hand, that the determination in the step S2 or step S3 is negative means that the present transmission condition does not fall under the elongation-affected shift condition near the minimum speed ratio. In this case, the shift controller 22 determines in steps S12 and S 13 whether or not the present transmission condition falls under an elongation-affected shift condition near the maximum speed ratio. The elongation-affected shift condition near the maximum speed ratio means a transmission condition under which the target speed ratio *Dip* cannot be realized unless the V-chain 13 is elongated.

In the step S12, the shift controller 22 determines whether or not the real speed ratio *ip* is not smaller than a maximum speed ratio threshold value *ip_max.* Here, the maximum speed ratio threshold value *ip_max* is set equal to the maximum speed ratio without elongation in FIG. 9. The maximum speed ratio threshold value *ip_max* may be set at a value slightly smaller than the maximum speed ratio without elongation in consideration of the impact of a hardware performance variation. If the determination in the step S12 is negative, the shift controller 22 executes the normal speed ratio feedback control, to which the PI control or the PID control is applied, in the steps S5 and S6.

If the determination in the step S12 is affirmative, the shift controller 22 determines in the step S13 whether or not the real speed ratio *ip* is smaller than the target speed ratio *Dip.*

That the determination is affirmative in the step S 13 means that the real speed ratio *ip* remains to be smaller than the target speed ratio *Dip* although it is located on a line of the maximum speed ratio without elongation in FIG. 9 or at a left upper side of that line. In this case, if the V-chain 13 is not elongated, the integral term is only accumulated in the normal speed ratio feedback control and the real speed ratio *ip* cannot reach the target speed ratio *Dip*. On the other hand, as described above, the accumulation of the integral term causes a response delay of a speed ratio change when the target speed ratio *Dip* changes to a value smaller than the maximum speed ratio without elongation. That the determination in the step S 13 is affirmative means that the present transmission condition falls under the elongation-affected shift condition near the maximum speed ratio.

If the determination in the step S13 is negative, the shift controller 22 executes the feedback control by applying the fixed value stored in the RAM in step S4 to the integral term as described above.

On the other hand, if the determination in the step S12 or S 13 is negative, the shift controller 22 executes the normal speed ratio feedback control in the steps S5 and S6.

According to this embodiment, the target speed ratio *Dip* can be set in a wide range from the minimum speed ratio when the V-chain 13 is not elongated to the maximum speed ratio when the V-chain 13 is elongated. On the other hand, the elongation-affected shift condition, under which the real speed ratio *ip* cannot follow the target speed ratio *Dip* depending on whether or not the V-chain 13 is elongated, is determined and the update of the integral term of the speed ratio feedback control is prohibited under the elongation-affected shift condition. Thus, according to this embodiment, a target speed ratio setting range is widened, whereas a response delay caused by the accumulation of the integral term can be prevented for the both elongation-affected shift conditions near the minimum speed ratio and near the maximum speed ratio.

In the first and second embodiments, the fixed value is not limited to the integral term immediately before the elongation-affected shift condition holds. For example, the fixed value may be a value obtained by adding a predetermined amount to the integral term immediately before the elongation-affected shift condition holds. Further, the limit of the feedback control is not limited to the fixing of the integral term to the fixed value. It can be achieved by providing an upper limit for the integral term or by limiting the update amount of the integral term.

In the first and second embodiments, the integral terms are not limited to the integral terms of the PI control expression and the PID control expression. This invention is applicable to feedback controls in general including a correction term to be accumulated with the passage of time, and the integral terms cover any correction amount in general that is accumulated with the passage of time. Thus, this invention can also be applied, for example, to a sliding mode control.

In the above first and second embodiments, the target speed ratio *Dip* is a target of the feedback control. Specifically, the feedback control amount $\Delta x$ of the PI control expression or the PID control expression is set as a change rate of the target speed ratio. In this case, thrust forces of the primary pulley 11 and the secondary pulley 12 corresponding to the target speed ratio after a correction using the feedback control amount $\Delta x$ are respectively realized by the hydraulic control circuit 21 via the hydraulic cylinders 15 and 16. Further, if the thrust force of one of the primary pulley 11 and the secondary pulley 12 is kept constant, the feedback control can be realized by the hydraulic control circuit 21 changing only the other thrust force.

On the other hand, it is also possible to directly feedback-control the thrust forces of the pulleys not only based on the target speed ratio, but also based on a speed ratio deviation.

For example, a case is assumed where the thrust force of the primary pulley 11 is constant and the speed ratio of the CVT 4 is changed by controlling the thrust force of the secondary pulley 12. In this case, the feedback control amount $\Delta x$ of the PI control equation or the PID control equation is assumed as the thrust force of the secondary pulley 12. $\Delta y$ denotes the speed ratio deviation.

Also in this case, the determination of the elongation-affected shift condition is as in the first or second embodiment. A different point is that the feedback control target in the steps S4 to S6 in FIGS. 8 and 10 is the thrust force of the secondary pulley 12 instead of the speed ratio.

As just described, even if the control target is the thrust force of the secondary pulley 12 in the first or second embodiment, a preferable effect similar to that when the feedback control target is the speed ratio can be obtained for the prevention of a response delay caused by the accumulation of the integral term under the elongation-affected shift condition.

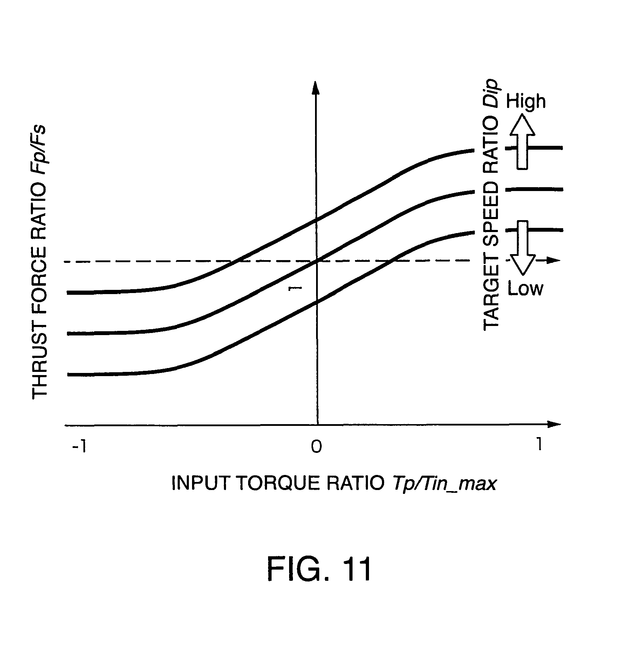

Referring to FIGS. 11 to 14 and 15A, 15B, a third embodiment of this invention will be described.

In this embodiment, the target of the feedback control is a pulley thrust force and the elongation-affected shift condition is determined by a method different from those of the first and second embodiments.

The elongation-affected shift condition will be described in relation to the pulley thrust force. If a large slip occurs between the V-chain 13 and the primary pulley 11 or the secondary pulley 12 when the V-chain 13 transmits a torque between the primary pulley 11 and the secondary pulley 12, it is difficult to transmit the torque. Such a slip occurs due to a reduction in the thrust force of the primary pulley 11 or that of the secondary pulley 12. For normal torque transmission, a pulley thrust force not smaller than a slip limit thrust force needs to be applied to both the primary pulley 11 and the secondary pulley 12.

In the following description, a pulley thrust force applied to the primary pulley 11 by the hydraulic cylinder 15 is referred to as a primary thrust force and that applied to the secondary pulley 12 by the hydraulic cylinder 16 is referred to as a secondary thrust force.

A ratio of the primary thrust force and the secondary thrust force for realizing the target speed ratio is referred to as a thrust force ratio. The speed ratio when the primary thrust force and the secondary thrust force are equal in a no-load state of the CVT 4, i.e. in a state where an input torque is zero is 1.0. The speed ratio is on a high side if the primary thrust force is greater than the secondary thrust force while being on a low side if the primary thrust force is smaller than the secondary thrust force.

A tensile force of the V-chain 13 in a part meshed with the primary pulley 11 is greater on an upstream side than on a downstream side in a state where the V-chain 13 is loaded, i.e. in a state where a torque is input to the primary pulley 11 and the V-chain 13 is transmitting the torque to the secondary pulley 12. This difference in tensile force exerts a force for reducing the winding radius of the V-chain 13 on the primary pulley 11. As a result, the primary thrust force for maintaining the same speed ratio increases as compared with the no-load state.

For the above reason, the primary thrust force and the secondary thrust force for realizing the target speed ratio *Dip* are expressed as a thrust force ratio determined by the target speed ratio *Dip* and the tensile force of the V-chain 13. In other words, in order for the VT 4 to realize the target speed ratio without causing a substantial slip, both the primary thrust force and the secondary thrust force need to be not smaller than the slip limit thrust force and satisfy the thrust force ratio. It should be noted that the substantial slip is written since the primary pulley 11 and the secondary pulley 12 minutely slip also in normal torque transmission in the case of the V-chain 13. In the following description, the substantial slip means such a slip of the V-chain 13 as to affect torque transmission.

The slip limit thrust force can be obtained by the following equation (1).

$$F\,\text{min} = Fs\_\text{min} = Fp\_\text{min} = \frac{|Tp| \cdot \cos\alpha}{2\mu Rp} \qquad (1)$$

where,

Fmin = slip limit thrust force;
Fs_min = slip limit secondary thrust force;
Fp_min = slip limit primary thrust force;
Tp = primary input torque input into primary pulley;
α = sheave angle;
μ = friction coefficient between V-chain and pulleys; and
Rp = winding radius of V-chain on primary pulley.

The slip limit secondary thrust force Fs_min is also expressed by the following equation (2).

$$Fs\_\text{min} = \frac{|Ts| \cdot \cos\alpha}{2\mu Rs} \qquad (2)$$

where,

Ts = secondary input torque input into secondary pulley; and
Rs = winding radius of V-chain on secondary pulley.

Here, if ip denotes the speed ratio, the primary input torque Tp and the secondary input torque Ts are in a relationship defined by the following equation (3). The winding radius Rp of the V-chain 13 on the primary pulley 11 and the winding radius Rs of the V-chain 13 on the secondary pulley 12 are in a relationship defined by the following equation (4).

$$Ts = Tp \cdot ip \qquad (3)$$

$$Rs = Rp \cdot ip \qquad (4)$$

From the above relationships, the equations (1) and (2) are equivalent and the slip limit thrust force can be the same value for the primary pulley 11 and the secondary pulley 12.

To reliably prevent the substantial slip of the V-chain 13, it is also preferable to set the slip limit thrust force at a value slightly greater than a value obtained by the equation (1).

The thrust force ratio can be obtained by referring to a characteristic map shown in FIG. 11. In a diagram shown in FIG. 11, a horizontal axis represents an input torque ratio. The input torque ratio is a ratio of the input torque Tp of the primary pulley 11 to a transmission torque capacity Tin_max of the V-chain 13, i.e. Tp/Tin_max. The transmission torque capacity Tin_max of the V-chain 13 is set equal to a value of the input torque Tp obtained by back calculation of substituting the smaller one of a real primary thrust force and a real secondary thrust force into the slip limit thrust force F_min of the equation (1). In other words, the transmission torque capacity Tin_max means a maximum input torque Tp of the primary pulley 11, at which the V-chain 13 does not slip both for the real primary thrust force and for the real secondary thrust force. A vertical axis of FIG. 11 represents a thrust force ratio Fp/Fs of the primary thrust force Fp and the secondary thrust force Fs necessary to achieve various target speed ratios Dip under the input torque ratio Tp/Tin_

*max.*

The shift controller 22 obtains the thrust force ratio *Fp/Fs* from the input torque ratio *Tp/Tin_max* and the target speed ratio *Dip* by referring to the characteristic map shown in FIG. 11.

The shift controller 22 sets the secondary thrust force *Fs* as the slip limit thrust force and obtains the primary thrust force *Fp* from the slip limit thrust force and the thrust force ratio in a region where the thrust force ratio *Fp/Fs* is not smaller than unity.

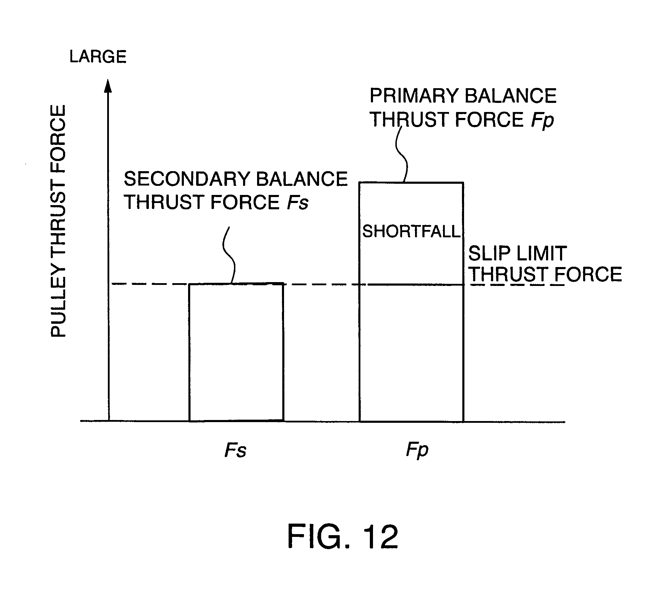

Referring to FIG. 12, the thus obtained secondary thrust force *Fs* and primary thrust force *Fp* are respectively referred to as a secondary balance thrust force and a primary balance thrust force. It should be noted that FIG. 12 shows a method for determining the secondary balance thrust force and the primary balance thrust force in the region where the thrust force ratio is not smaller than unity. Here, a shortfall of the primary thrust force is added based on the secondary thrust force so that a ratio of the secondary thrust force and the primary thrust force satisfies the thrust force ratio.

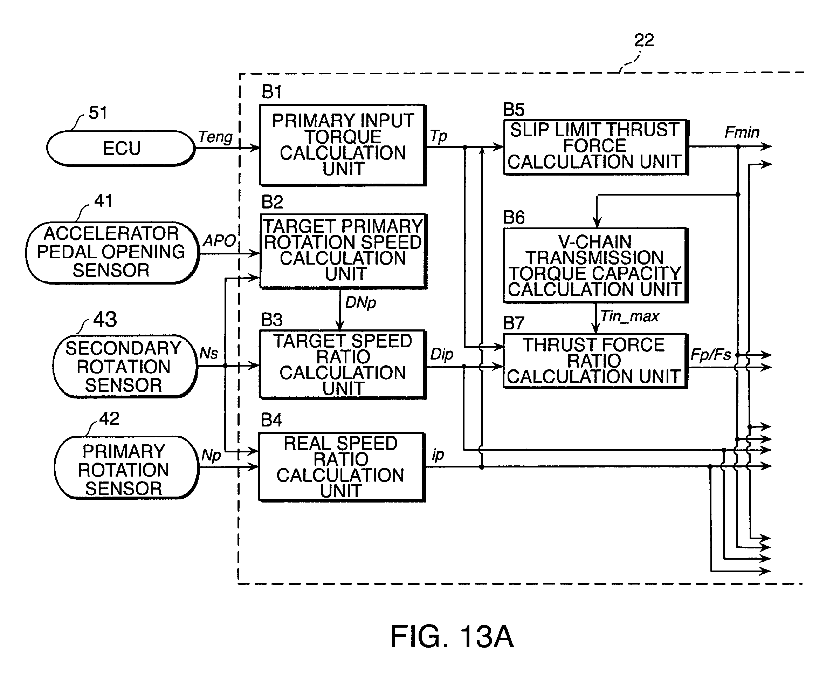

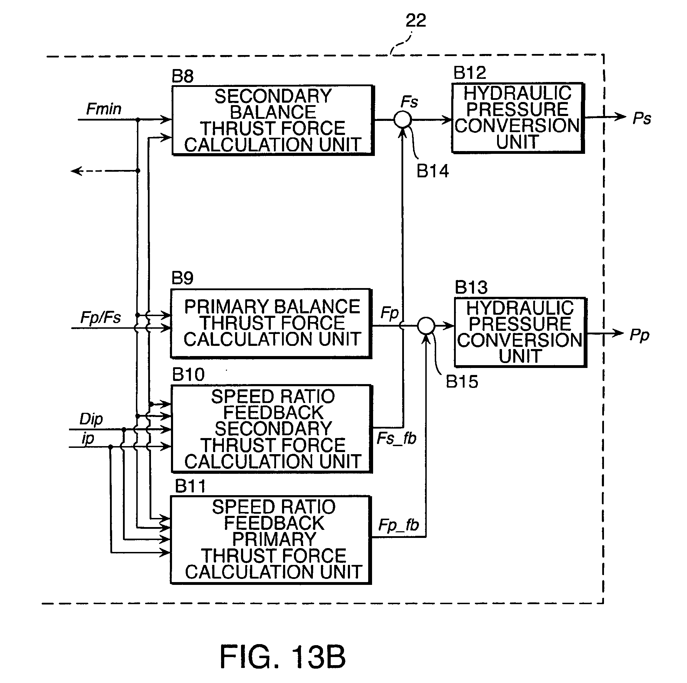

Referring to FIGS. 13A and 13B, the configuration of the shift controller 22 for feedback-controlling the primary thrust force and the secondary thrust force will be described.

An engine torque *Teng* in the form of a signal is input to the shift controller 22 from an engine control unit (ECU) 51 for controlling the operation of the internal combustion engine 1. Further, each of the accelerator pedal opening *APO* detected by the accelerator pedal opening, the rotation speed *Np* of the primary pulley 11 detected by the primary rotation sensor 42 and the rotation speed *Ns* of the secondary pulley 12 detected by the secondary rotation sensor 43 are input in the form of a signals.

The shift controller 22 calculates the slip limit thrust force *Fmin,* the target speed ratio *Dip,* the secondary balance thrust force *Fs* and the primary balance thrust force *Fp* from the above input data. To this end, the shift controller 22 comprises a primary input torque calculation unit B1, a target primary rotation speed calculation unit B2, a target speed ratio calculation unit B3, an real speed ratio calculation unit B4, a slip limit thrust force calculation unit B5, a V-chain transmission torque capacity calculation unit B6, a thrust force ratio calculation unit B7, a secondary balance thrust force calculation unit B8, a primary balance thrust force calculation unit B9, a speed ratio feedback secondary thrust force calculation unit B10, a speed ratio feedback primary thrust force calculation unit B11, hydraulic pressure conversion units B12, B13 and adders B14, B 15.

All of the blocks B1 to B 15 shown in the figure are virtual units for the purpose of describing the function of the shift controller 22, and do not exist as physical entities.

The primary input torque calculation unit B 1 calculates the primary input torque *Tp* by a known method based on the engine torque *Teng,* a lock-up state of the torque converter 2 and an inertia torque of a power transmission member from the internal combustion engine 1 to the primary pulley 11 that are input from the ECU 51.

The target primary rotation speed calculation unit B2 calculates a target primary rotation speed *DNp* from the accelerator pedal opening *APO* and the rotation speed *Ns* of the secondary pulley 12 by referring to the characteristic shift map shown in FIG. 9 stored inside in advance.

The target speed ratio calculation unit B3 calculates the target speed ratio *Dip* from the rotation speed *Ns* of the secondary pulley 12 and the target primary rotation speed *DNp* input from the target primary rotation speed calculation unit B2.

The real speed ratio calculation unit B4 calculates the real speed ratio *ip* of the CVT 4 from the rotation speed *Ns* of the secondary pulley 12 and the rotation speed *Np* of the primary pulley 11 detected by the primary rotation sensor 42.

The slip limit force calculation unit B5 calculates the slip limit thrust force *Fmin* from the primary input torque *Tp,* the winding radius Rp of the V-chain 13 on the primary pulley 11, the friction coefficient between the V-chain 13 and the pulley 11 and the sheave angle $\alpha$ based on the equation (1). The slip limit force calculation unit B5 also calculates the slip limit thrust force *Fmin* from the primary input torque *Tp,* the winding radius *Rs* of the V-chain 13 on the secondary pulley 12, the friction coefficient between the V-chain 13 and the secondary pulley 12 and the sheave angle $\alpha$ based on the equation (2). The primary input torque *Tp* is input from the primary input torque calculation unit B1. The winding radius *Rp* of the V-chain 13 on the primary pulley 11 and the winding radius *Rs* of the V-chain 13 on the secondary pulley 12 are calculated from the real speed ratio *ip.* The sheave angle $\alpha$ is a known value predetermined by the shapes and dimensions of the primary pulley 11, the secondary pulley 12 and the V-chain 13, and the friction coefficient is a known value predetermined from the materials of the primary pulley 11, the secondary pulley 12 and the V-chain 13. The slip limit force calculation unit B5 sets the smaller one of the obtained slip limit thrust forces *Fp_min* and *Fs_min* as *F_min.*

Since Rp = *Rs · ip, Fs_min* is used as the slip limit thrust force *F_min* if the real speed ratio ip is greater than unity and *Fp_min* is used as the limit thrust force *F_min* if the real speed ratio *ip* is smaller than unity. It should be noted that it is also possible to set a value slightly greater than the calculated value by the equation (1) as the slip limit thrust force *Fmin* in terms of preventing the slip of the V-chain.

The V-chain transmission torque capacity calculation unit B6 uses the value of the primary input torque *Tp* obtained by entering the set slip limit thrust force *F_min* into the equation (1) as the transmission torque capacity *Tin_max.*

The thrust force ratio calculation unit B7 calculates the input torque ratio *Tp/Tin_max* from the transmission torque capacity *Tin_max* and the primary input torque *Tp* and obtains the thrust force ratio *Fp/Fs* based on the input torque ratio *Tp/Tin_max* and the target speed ratio *Dip* by referring to the thrust force ratio characteristic map shown in FIG. 11. The thrust force ratio map is stored in the ROM of the shift controller 22 in advance.

The secondary balance thrust force calculation unit B8 determines whether or not the thrust force ratio *Fp/Fs* is not smaller than unity. If *Fp/Fs* is not smaller than unity, the secondary balance thrust force *Fs* is set equal to *Fmin.* If *Fp/Fs* is smaller than unity, the secondary balance thrust force *Fs* is set at *Fs =Fmin/(Fp/Fs).*

The primary balance thrust force calculation unit B9 sets the primary balance thrust force *Fp* to be equal to *Fp = Fmin · (Fp/Fs)* if *Fp/Fs* is not smaller than unity. If *Fp/Fs* is smaller than unity, the primary balance thrust force *Fp* is set equal to *Fmin.*

Referring to FIG. 12, this setting will be described. If *Fp/Fs* is not smaller than unity, i.e. the primary balance thrust force *Fp* is greater than the secondary balance thrust force *Fs,* the secondary balance thrust force *Fs* is set equal to the slip limit thrust force *Fmin.* On the other hand, the primary balance thrust force *Fp* is additionally increased to the value *Fmin · (Fp/Fs)* corresponding to the thrust force ratio *Fp/Fs.* Conversely, if *Fp/Fs* is smaller than unity, i.e. the primary balance thrust force *Fp* is smaller than the secondary balance thrust force *Fs,* the primary balance thrust force *Fp* is set equal to the slip limit thrust force *Fmin.* The secondary balance thrust force *Fs* is additionally increased to the value *Fmin/(Fp/Fs)* corresponding to the thrust force ratio *Fp/Fs.*

Referring again to FIGS. 13A and 13B, the speed ratio feedback secondary thrust force calculation unit B10 calculates a speed ratio feedback secondary thrust force *Fs_fb* so that the real speed ratio *ip* approaches the target speed ratio *Dip* based on the difference or the ratio of the real speed ratio *ip* and the target speed ratio *Dip.* The speed ratio feedback secondary thrust force *Fs_fb* is calculated using the aforementioned PI control expression or PID control expression. However, the feedback correction amount *Δx* on the left-hand sides of these expressions is not the feedback correction amount of the speed ratio, but the speed ratio feedback secondary thrust force *Fs_fb* equivalent to the feedback correction amount of the secondary thrust force. The speed ratio feedback secondary thrust force calculation unit B10 further restricts the speed ratio feedback secondary thrust force *Fs_fb* so that the sum of the speed ratio feedback secondary thrust force *Fs_fb* and the secondary balance thrust force *Fs* does not fall below the slip limit thrust force *Fmin.*

The speed ratio feedback primary thrust force computation unit B11 calculates a speed ratio feedback primary thrust force *Fp_fb* so that the real speed ratio *ip* approaches the target speed ratio *Dip* based on the difference or the ratio of the real speed ratio *ip* and the target speed ratio *Dip.* The speed ratio feedback primary thrust force *Fp_fb* is calculated using the aforementioned PI control equation or PID control equation. However, the feedback correction amount *Δx* on the left-hand sides of these equation is not the feedback correction amount of the speed ratio, but the speed ratio feedback primary thrust force *Fp_fb* equivalent to the feedback correction amount of the primary thrust force. The speed ratio feedback primary thrust force computation unit B11 further restricts the speed ratio feedback primary thrust force *Fp_fb* so that the sum of the speed ratio feedback primary thrust force *Fp_fb* and the primary balance thrust force *Fp* does not fall below the slip limit thrust force *Fmin.*

The adder B14 adds the speed ratio feedback secondary thrust force *Fs_fb* to the secondary balance thrust force *Fs* and inputs the addition result to the hydraulic pressure conversion unit B12. The adder B15 adds the speed ratio feedback primary thrust force *Fp_fb* to the primary balance thrust force *Fp* and inputs the addition result to the hydraulic pressure conversion unit B 13.

The hydraulic pressure computation unit B12 converts an input value *Fs+Fs_fb* from the adder B14 into a target secondary pressure *Ps* to be supplied to the hydraulic cylinder 16 and outputs it to the hydraulic control circuit 21. Specifically, the target secondary pressure *Ps* is calculated by dividing a value obtained by subtracting a centrifugal thrust force and a spring thrust force from the input value *Fs+Fs_fb* by a pressure receiving area. Here, the centrifugal thrust force is calculated from the rotation speed *Ns* of the secondary pulley 12 and a predetermined secondary pulley centrifugal thrust coefficient. The spring thrust force is calculated from a stroke distance of the hydraulic cylinder 16.

The hydraulic pressure conversion unit B13 converts an input value *Fp+Fp_fb* from the adder B 15 into a target primary pressure *Pp* to be supplied to the hydraulic cylinder 15 and outputs it to the hydraulic control circuit 21. Specifically, the target primary pressure Pp is calculated by dividing a value obtained by subtracting a centrifugal thrust force and a spring thrust force from the input value *Fp+Fp_fb* by a pressure receiving area. Here, the centrifugal thrust force is calculated from the rotation speed *Np* of the primary pulley 11 and a predetermined primary pulley centrifugal thrust coefficient. The spring thrust force is calculated from a stroke distance of the hydraulic cylinder 15.

As described above, in this embodiment, the pulley thrust forces, i.e. the target primary pressure *Pp* to be supplied to the hydraulic cylinder 15 and the target secondary pressure *Ps* to be supplied to the hydraulic cylinder 16 are targets of the feedback control. Also in this case, if the shift controller 22 sets the target speed ratio *Dip* between the maximum speed ratio without elongation and the minimum speed ratio with elongation by referring to the characteristic map shown in FIG. 9 as in the second embodiment, a wide speed ratio range can be set, but on the other had there are cases where the target speed ratio *Dip* cannot be realized depending on whether or not the V-chain 13 is elongated for both the minimum speed ratio and the maximum speed ratio as in the second embodiment. Specifically, if the V-chain 13 is not elongated, the target speed ratio *Dip* in the region of FIG. 9 between the maximum speed ratio with elongation and the maximum speed ratio without elongation cannot be physically achieved. If the V-chain 13 is elongated, the target speed ratio *Dip* in the region of FIG. 9 between the minimum speed ratio with elongation and the minimum speed ratio without elongation cannot be physically achieved.

The shift controller 22 determines whether or not the elongation-affected shift condition holds for both transmission conditions near the minimum speed ratio and the maximum speed ratio so that the integral term is not accumulated under such a elongation-affected shift condition and limits the update of the integral term according to the determination result.

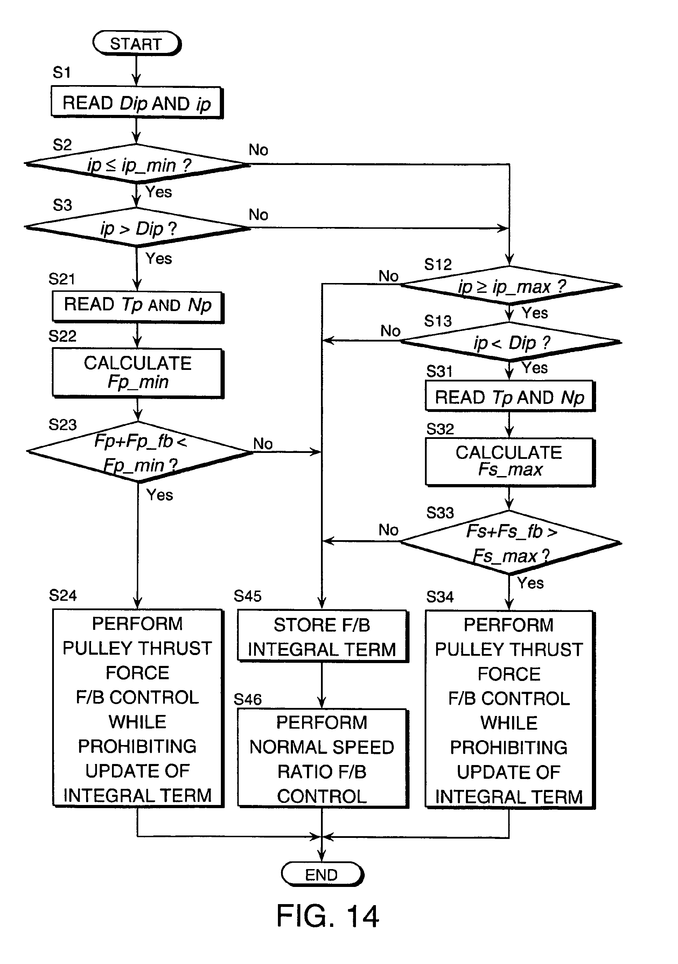

Referring to FIG. 14, an integral term update limiting routine executed by the shift controller 22 for this will be described.

Processings in the steps S1 to S3 and S12, S13 are the same as in the second embodiment. Processings in steps S45 and S46 are similar to those in the step S5 and S6 of the second embodiment, but differ in that the processing target in the steps S5 and S6 is the target speed ratio, whereas that in the steps S45 and S46 is the pulley thrust force.

That the determination is affirmative in the step S3 means that the present transmission condition does not fall under the elongation-affected shift condition near the minimum speed ratio as described above.

In this case, the shift controller 22 reads the primary input torque *Tp* and the rotation speed *Np* of the primary pulley 11 in a step S21.

Subsequently in a step S22, the shift controller 22 calculates a primary thrust force lower limit value *Fp_min* from the primary input torque *Tp.* The primary pulley 11 is so configured to prevent the V-groove from becoming wider than a certain width by the contact of the movable sheave with the stopper. After the movable sheave comes into contact with the stopper, the width of the V-groove of the primary pulley 11 does not change and the speed ratio does not become smaller even if the primary thrust force is further reduced. Accordingly, the primary thrust force lower limit value *Fp_min* is set based on the primary thrust force corresponding to the contact position of the movable sheave with the stopper. The primary thrust force lower limit value *Fp_min* is calculated from the primary input torque *Tp* and the rotation speed *Np* of the primary pulley 11. In consideration of an uncertain factor caused by a hardware performance variation, the primary thrust force lower limit value *Fp_min* may be set at a value slightly greater than the calculated value.

In a step S23, the shift controller 22 determines whether or not the added value *Fp+Fp_fb* by the adder B15 is smaller than the primary thrust force lower limit value *Fp_min.* If the added value *Fp+Fp_fb* is smaller than the primary thrust force lower limit value *Fp_min,* the real speed ratio *ip* cannot reach the target speed ratio *Dip* if the V-chain 13 is elongated. If the feedback control of the primary thrust force is executed in such a situation, the integral term included in the feedback control amount *Fp_fb* is accumulated at every execution. As a result, the real speed ratio *ip* follows with a delay when the target speed ratio *Dip* exceeds the minimum speed ratio with elongation.

Accordingly, if the determination in the step S23 is affirmative, the shift controller 22 limits the feedback control amount *Fp_fb* by setting the integral term included in the feedback control amount *Fp_fb* to a fixed value and executes the feedback control of the pulley thrust force based on the limited value in a step S24. Specifically, if the determination in the step S23 is affirmative, the feedback control of the pulley thrust force is executed in the step S24 using the integral term before update stored in a buffer without updating the integral term in the step S45. After the processing of the step S24, the shift controller 22 terminates the routine. If the determination in the step S23 is negative, the shift controller 22 executes the normal feedback control of the pulley thrust force in the steps S45 and S46.

On the other hand, that the determination in the step S13 is affirmative means that the present transmission condition falls under the elongation-affected shift condition near the maximum speed ratio as described above.

In this case, the shift controller 22 calculates a secondary thrust force upper limit value *Fs_max* from the primary input torque *Tp* in a step S32. The secondary thrust force upper limit value *Fs_max* is a secondary thrust force calculated from the primary input torque *Tp* and the rotation speed *Np* of the primary pulley 11 for realizing the maximum speed ratio without elongation. In consideration of an uncertain factor caused by a hardware performance variation, the secondary thrust force upper limit value *Fs_max* may be set at a value slightly smaller than the calculated value.

In a step S33, the shift controller 22 determines whether or not the added value *Fs+Fs_fb* by the adder R14 is greater than the secondary thrust force upper limit value *Fs_max.* If the added value *Fs+Fs_fb* is greater than the secondary thrust force upper limit value *Fs_max,* the real speed ratio *ip* cannot reach the target speed ratio *Dip* unless the V-chain 13 is elongated. As a result, the integral term included in the feedback control amount *Fs_fb* is accumulated at every routine execution, and the real speed ratio *ip* follows with a delay when the target speed ratio *Dip* falls below the maximum speed ratio without elongation.

If the determination in the step S33 is affirmative, the shift controller 22 limits the feedback control amount *Fs_fb* by setting the feedback integral term included in the feedback control amount *Fs_fb* to a fixed value and executes the feedback control of the pulley thrust force based on the limited value in a step S34. Specifically, if the determination in the step S33 is affirmative, the feedback control of the pulley thrust force is executed in the step S34 using the integral term before update stored in the buffer without updating the integral term in the step S45. After the processing of the step S34, the shift controller 22 terminates the routine. If the determination in the step S33 is negative, the shift controller 22 executes the normal feedback control of the pulley thrust force in the steps S45 and S46. Further, if the determination in either one of the steps S12 and S13 is negative, the shift controller 22 also executes the normal feedback control of the pulley thrust force in the steps S45 and S46.

By the above execution of the routine, the integral term included in the feedback control amount $Fp\_fb$ is fixed if the output value $Fp+Fp\_fb$ of the adder B15 shown in FIG. 13B falls below the primary thrust force lower limit value $Fp\_min$ and the integral term included in the feedback control amount $Fs\_fb$ is fixed if the output value $Fs+Fs\_fb$ of the adder B 14 exceeds the secondary thrust force upper limit value $Fs\_max.$

In this way, in this embodiment, a response delay when the transmission condition changes from the elongation-affected shift condition to a elongation-unaffected transmission condition is prevented by limiting the feedback control for the primary thrust force or the secondary thrust force corresponding to the elongation-affected shift condition.

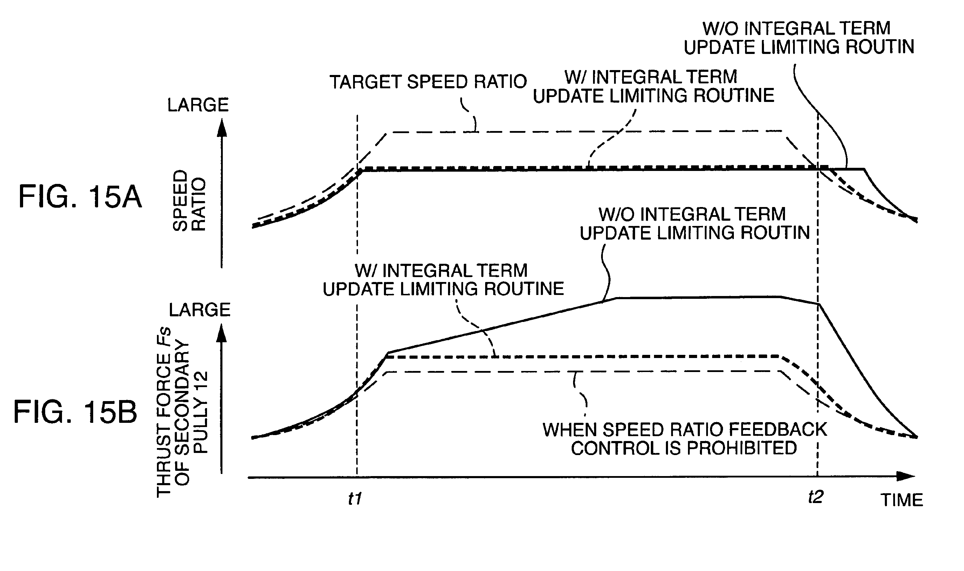

Referring to FIGS. 15A and 15B, a change in the pulley thrust force according to this embodiment when the elongation-affected shift condition near the maximum speed ratio holds at time $t1$ due to an increase in the target speed ratio $Dip$ and this condition no longer holds at time $t2$ will be described. In FIG. 15A, thin broken line represents the target speed ratio $Dip.$ Thick broken line represents a change in the real speed ratio $ip$ when the integral term update limiting routine according to this embodiment is executed. Solid line represents a change in the real speed ratio $ip$ when the integral term update limiting routine is executed under the elongation-affected shift condition.

In FIG. 15B, thin broken line represents a change in the pulley thrust force of the secondary pulley 12 when the speed ratio feedback control is prohibited. Here, the pulley thrust force of the secondary pulley 12 when the speed ratio feedback control is prohibited is equivalent to the secondary balance thrust force $Fs$ output by the secondary balance thrust force calculation unit B8 of FIG. 13B. Thick broken line represents a change in the pulley thrust force of the secondary pulley 12 when the integral term update limiting routine is executed. Solid line represents a change in the pulley thrust force of the secondary pulley 12 when the integral term update limiting routine is not executed.

When the V-chain 13 is elongated and the elongation-affected shift condition near the maximum speed ratio holds at time $t1$ as shown in FIG. 15A, the real speed ratio $ip$ cannot follow the target speed ratio $Dip$ thereafter and a deviation state in which the real speed ratio $ip$ is constantly below the target speed ratio $Dip$ continues.

Contrary to this, the shift controller 22 accumulates the integral term under the PI control or the PID control by the pulley thrust force feedback control function shown in FIG. 13B. As a result, the pulley thrust force $Fs$ of the secondary pulley 12 increases with time. If the shift controller 22 does not execute the integral term update limiting routine of FIG. 14 in parallel with the feedback control of the pulley thrust force, the thrust force $Fs$ of the secondary pulley 12 continues to increase as shown by solid line of FIG. 15B due to the accumulation of the integral term. If the target speed ratio $Dip$ starts decreasing and the elongation-affected shift condition no longer holds at time $t2$, the thrust force $Fs$ of the secondary pulley 12 starts decreasing. However, a decrease in the thrust force $Fs$ of the secondary pulley 12 cannot immediately follow a decrease in the target speed ratio $Dip$ since it takes time to reduce the cumulative integral term. As a result, the real speed ratio $ip$ matches the target speed ratio $Dip$ after the elapse of a considerable time from time $t2$ as shown by solid line of FIG. 15A.

On the other hand, if the shift controller 22 executes the integral term update limiting routine of FIG. 14 in parallel with the feedback control of the pulley thrust force, the integral term used in the feedback control of the pulley thrust force is, thereafter, fixed to a value immediately before the pulley thrust force $Fs$ reaches the maximum speed ratio threshold value $ip\_max$ when the pulley thrust force of the secondary pulley 12 reaches the maximum speed ratio threshold value $ip\_max$ after the real speed ratio $ip$ starts deviating from the target speed ratio $Dip$ at time $t1$. Thus, even if the deviation state of the real speed ratio $ip$ and the target speed ratio $Dip$ continues, the integral term used in the feedback control of the pulley thrust force is not accumulated and the pulley thrust force of the secondary pulley 12 is maintained at a value obtained by adding a certain value to the secondary balance thrust force $Fs.$ Therefore, there is no command for an excessive pulley thrust force exceeding the maximum speed ratio threshold value $ip\_max.$

As just described, if the target speed ratio $Dip$ starts decreasing before time $t2$ by prohibiting the update of the integral value, the pulley thrust force of the secondary pulley 12 immediately starts decreasing. After the target speed ratio $Dip$ no longer satisfies the elongation-affected shift condition at time $t2$, the pulley thrust force of the secondary pulley 12 quickly decreases, thereby causing the real speed ratio $ip$ to match the target speed ratio $Dip.$

In each of the above embodiments, the speed ratio feedback control is limited by setting the integral term to the fixed value under the elongation-affected shift condition. However, the limit of the speed ratio feedback control is not limited to the setting of the integral term to the fixed value. For example, it is also possible to uniformly prohibit the feedback control. Also in this case, as shown in FIG. 15B, a preferable effect can be obtained for the prevention of a response delay of the real speed ratio $ip$ when the target speed ratio $Dip$ no longer satisfies the elongation-affected shift condition.

However, there are cases where the real speed ratio $ip$ can approach the target speed ratio $Dip$ by continual trial under a certain limit even under the elongation-affected shift condition. By considering such cases, the speed ratio feedback control is not prohibited even under the elongation-affected shift condition in each of the above embodiments.

The contents of Tokugan 2011-006651, with a filing date of January 17, 2011 in Japan, are hereby incorporated by reference.

Although the invention has been described above with reference to certain embodiments, the invention is not limited to the embodiments described above. Modifications and variations of the embodiments described above will occur to those skilled in the art, within the scope of the claims.

INDUSTRIAL FIELD OF APPLICATION

By applying the shift control device and the control method for continuously variable transmission according to this invention to a vehicle drive system, a response delay of a speed ratio feedback control can be resolved and a preferable effect in improving vehicle drive performance is obtained.

The embodiments of this invention in which an exclusive property or privilege is claimed are defined as follows:

**Claims**

1. A speed ratio control device for a continuously variable transmission changing a speed ratio between a pair of pulleys (11, 12) via an endless torque transmitting member (13) wound around the pair of pulleys (11, 12), comprising:

    a programmable controller (22) programmed to:

        perform feed back control of the speed ratio such that a real speed ratio between the pair of pulleys (11, 12) changes towards a target speed ratio;
        determine if an elongation-affected shift condition in which the real speed ratio is prevented from reaching the target speed ratio due to an elongation of the endless torque transmitting member (13) holds (S2, S3, S12, S13); and
        suppress the feed back control of the speed ratio when the elongation-affected shift condition has been determined to hold (S4, S24, S34).

2. The speed ratio control device as defined in Claim 1, wherein the controller (22) is further programmed to:

    perform the feed back control of the speed ratio by applying a feedback control amount including an accumulated integral term that increases as long as a discrepancy between the target speed ratio and the real speed ratio remains (S5, S6, S45, S46); and
    suppress the feedback control of the speed ratio by preventing the integral term from being accumulated (S4, S24, S34).

3. The speed ratio control device as defined in Claim 2, wherein the controller (22) is further programmed to:

    prevent the integral term from being accumulated by fixing the integral term, when the elongation-affected shift condition has been determined to hold, to a value obtained immediately before the elongation-affected shift condition was determined to hold (S4, S24, S34).

4. The speed ratio control device as defined in Claim 2, wherein the controller (22) is further programmed to:

    prevent the integral term from being accumulated by limiting the integral term by applying an upper limiting value when the elongation-affected shift condition has been determined to hold (S4, S24, S34).

5. The speed ratio control device as defined in any one of Claim 1 through Claim 4, wherein the controller (22) is further programmed to:

    determine that the elongation-affected shift condition holds when the real speed ratio is equal to or smaller than a minimum speed ratio with elongation that is an attainable minimum speed ratio when the endless torque transmitting member (13) has an elongation (S2), but greater than the target speed ratio (S3).

6. The speed ratio control device as defined in any one of Claim 1 through Claim 5, wherein the controller (22) is further programmed to:

    determine that the elongation-affected shift condition holds when the real speed ratio is equal to or greater than a maximum speed ratio without elongation that is an attainable maximum speed ratio when the endless torque transmitting member (13) has no elongation (S12), but smaller than the target speed ratio (S13).

7. The speed ratio control device as defined in any one of Claim 2 through Claim 4, wherein the controller (22) is further programmed to:

perform the feedback control of the speed ratio by feedback correcting the target speed ratio (S6).

8. The speed ratio control device as defined in any one of Claim 2 through Claim 4, wherein the real speed ratio varies depending on a pulley thrust force exerted on each of the pair of pulleys (11, 12) and the controller (22) is further programmed to:

perform the feedback control of the speed ratio by feedback correcting the pulley thrust force exerted on any of the pair of pulleys (11, 12) (S43).

9. The speed ratio control device as defined in Claim 7 or Claim 8, wherein the pair of pulleys (11, 12) comprises a primary pulley (11) into which a rotational torque is input and a secondary pulley (12) from which a rotational torque is output and the controller is further programmed to:

determine that the elongation-affected shift condition holds when the real speed ratio is equal to or smaller than a minimum speed ratio with elongation that is an attainable minimum speed ratio when the endless torque transmitting member (13) has an elongation (S2), but greater than the target speed ratio (S3); and prevent the integral term from being accumulated (S24) when the elongation-affected shift condition has been determined to hold and a primary pulley thrust force to which the feedback control is applied is smaller than a predetermined pulley thrust force lower limit (S23).

10. The speed ratio control device as defined in Claim 7 or Claim 8, wherein the pair of pulleys (11, 12) comprises a primary pulley (11) into which a rotational torque is input and a secondary pulley (12) from which a rotational torque is output and the controller is further programmed to:

determine that the elongation-affected shift condition holds when the real speed ratio is equal to or greater than a maximum speed ratio without elongation that is an attainable maximum speed ratio when the endless torque transmitting member (13) has no elongation (S12), but smaller than the target speed ratio (S 13); and prevent the integral term from being accumulated (S34) when the elongation-affected shift condition has been determined to hold and a secondary pulley thrust force to which the feedback control is applied is greater than a predetermined pulley thrust force upper limit (S33).

11. The speed ratio control device as defined in any one of Claim 1 through Claim 10, wherein the target speed ratio is set within an entire region from a minimum speed ratio without elongation that is attainable when the endless torque transmitting member (13) has no elongation to a maximum speed ratio with elongation that is attainable when the endless torque transmitting member (13) has an elongation.

12. A speed ratio control method for a continuously variable transmission changing a speed ratio between a pair of pulleys (11, 12) via an endless torque transmitting member (13) wound around the pair of pulleys (11, 12), comprising:

perform feed back control of the speed ratio such that a real speed ratio between the pair of pulleys (11, 12) changes towards a target speed ratio; determine if an elongation-affected shift condition in which the real speed ratio is prevented from reaching the target speed ratio due to an elongation of the endless torque transmitting member (13) holds (S2, S3, S12, S13); and suppress the feed back control of the speed ratio when the elongation-affected shift condition has been determined to hold (S4, S24, S34).

FIG. 1

FIG. 2

FIG. 3

FIG. 4

FIG. 5

FIG. 6

FIG. 7

START

S1 READ *Dip* AND *ip*

S2 $ip \leq ip\_min$ ? → No

Yes

S3 $ip > Dip$ ? → No

Yes

S4 PERFORM SPEED RATIO F/B CONTROL WHILE PROHIBITING UPDATE OF INTEGRAL TERM

S5 STORE F/B INTEGRAL TERM

S6 PERFORM NORMAL SPEED RATIO F/B CONTROL

END

FIG. 8

FIG. 9

START

S1  READ *Dip* AND *ip*

S2  *ip* ≤ *ip_min* ?  —No→

Yes

S3  *ip* > *Dip* ?  —No→

Yes

S12  *ip* ≥ *ip_max* ?  —No→

Yes

S13  *ip* < *Dip* ?  —No→

Yes

S4  PERFORM SPEED RATIO F/B CONTROL WHILE PROHIBITING UPDATE OF INTEGRAL TERM

S5  STORE F/B INTEGRAL TERM

S6  PERFORM NORMAL SPEED RATIO F/B CONTROL

END

FIG. 10

FIG. 11

LARGE

PULLEY THRUST FORCE

PRIMARY BALANCE
THRUST FORCE *Fp*

SECONDARY BALANCE
THRUST FORCE *Fs*

SHORTFALL

SLIP LIMIT
THRUST FORCE

*Fs*                    *Fp*

# FIG. 12

FIG. 13A

EP 2 667 057 A1

EP 2 667 057 A1

FIG. 13B

FIG. 14

FIG. 15A

FIG. 15B

EP 2 667 057 A1

<table>
<tr><td colspan="2" align="center"><strong>INTERNATIONAL SEARCH REPORT</strong></td><td>International application No.<br>PCT/JP2011/076192</td></tr>
</table>

A. CLASSIFICATION OF SUBJECT MATTER
*F16H61/02*(2006.01)i, *F16H61/662*(2006.01)i

According to International Patent Classification (IPC) or to both national classification and IPC

B. FIELDS SEARCHED

Minimum documentation searched (classification system followed by classification symbols)
F16H61/02, F16H61/662

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-189079 A (Fuji Heavy Industries Ltd.), 20 July 2006 (20.07.2006), paragraphs [0044] to [0062]; fig. 4 to 10 (Family: none) | 1,5-7,12<br>2-4,8-11 |
| Y | JP 3-249464 A (Suzuki Motor Corp., Mitsubishi Electric Corp.), 07 November 1991 (07.11.1991), page 5, lower left column, line 7 to page 6, lower right column, line 6; fig. 3 & US 5131297 A & DE 4106471 A1 | 2-4,8-11 |
| Y | JP 10-89459 A (Nissan Motor Co., Ltd.), 07 April 1998 (07.04.1998), paragraphs [0020] to [0025], [0090], [0115]; fig. 20 & US 6192306 B1 | 4 |

[X] Further documents are listed in the continuation of Box C.   [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
06 February, 2012 (06.02.12)

Date of mailing of the international search report
14 February, 2012 (14.02.12)

Name and mailing address of the ISA/
Japanese Patent Office

Authorized officer

Facsimile No.

Telephone No.

Form PCT/ISA/210 (second sheet) (July 2009)

**INTERNATIONAL SEARCH REPORT**

International application No.

PCT/JP2011/076192

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2005-291290 A (JATCO Ltd.), 20 October 2005 (20.10.2005), paragraphs [0037] to [0038]; fig. 6 (Family: none) | 8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8327857 A

- JP 2011006651 A